# EUROPÄISCHE PATENTSCHRIFT

(11) **EP 4 087 062 B1**
(45) Veröffentlichungstag und Bekanntmachung des Hinweises auf die Patenterteilung: **24.01.2024**
(21) Anmeldenummer: 22164619.3
(22) Anmeldetag: 28.03.2022
(51) Int. Cl.: H01R 3/00

(54) **VERBINDUNGSSYSTEM ZUM VERBINDEN VON SIGNALLEITERN**
CONNECTION SYSTEM FOR CONNECTING SIGNAL CONDUCTORS
SYSTÈME DE CONNEXION PERMETTANT DE CONNECTER DES CONDUCTEURS DE SIGNAUX

(30) Priorität: 04.05.2021 DE 102021111447
(43) Veröffentlichungstag der Anmeldung: 09.11.2022
(73) Patentinhaber: MD Elektronik GmbH, 84478 Waldkraiburg (DE)
(72) Erfinder: Halbig, Thomas, 92345 Dietfurt (DE); Pritz, Helmut, 84539 Ampfing (DE)

(56) Entgegenhaltungen:
- EP-A2- 0 430 107
- DE-A1-102005 002 513
- DE-A1-102013 110 512
- DE-B3-102017 003 296

## Beschreibung

### Technisches Gebiet

Die Erfindung betrifft ein Verbindungssystem zum lösbaren Verbinden von, insbesondere elektrischen und optischen, Signalleitern.

### Stand der Technik

Um eine lösbare Verbindung zwischen optischen oder elektrischen Leitern herzustellen sind in der heutigen Zeit Steckverbinderanordnungen üblich. Hierbei wird üblicherweise auf ein Wirkprinzip zurückgegriffen, bei dem ein Rasthaken, der an einem der Steckpartner angeordnet ist, mit einer Rastlasche, die an dem anderen Steckpartner angeordnet ist, verbunden wird. Sowohl Rasthaken als auch Rastlasche sind hierbei in der Regel an den Gehäusen der Steckpartner angeordnet. Zwar werden bei diesem Steckvorgang auch die Leiter miteinander verbunden, doch erfolgt die primäre und mechanisch belastbare Verbindung in der Regel über die Gehäuse der Steckverbinder. Die Verbindung der Steckpartner über die Gehäuse besitzt jedoch den Nachteil, dass sich zusätzliche Positions- und Bauteiltoleranzen ergeben, die sich zu sehr großen Toleranzen aufsummieren können. Insbesondere wenn sehr hohe Signalraten über die optischen oder elektrischen Leiter übertragen werden sollen, kann hierbei das Problem auftreten, dass eine ausreichend stabile Verbindung der Leiter aufgrund der Toleranzschwankungen nicht mehr sichergestellt werden kann.

Die DE 10 2013 110512 A1 offenbart einen Steckverbinder mit einem Kontaktträger, wenigstens zwei Flachkontakten und einem Sekundärverriegelungsmittel mit Haltearmen, wobei der Kontaktträger mit Öffnungen zum Einstecken eines Sekundärverriegelungsmittels zum Festlegen der Flachkontakte im Kontaktträger vorgesehen ist und die Flachkontakte Primärverriegelungsmittel aufweisen, an denen sich der jeweilige Flachkontakt auf einem korrespondierenden Rastmittel in dem Kontaktträger abstützt. Jeder Flachkontakt verfügt ferner über eine Rastöffnung zur Durchsteckmontage des Sekundärverriegelungsmittels. Das Sekundärverriegelungsmittel ist mit seinen Haltearmen zur Festlegung der Flachkontakte in seiner Verriegelungsposition in die Öffnungen des Kontaktträgers eingesteckt, wobei die Haltearme durch die Rastöffnungen der Flachkontakte hindurch ragen und mit dem Kontaktträger unlösbar verbunden sind.

### Beschreibung der Erfindung

Es ist daher eine Aufgabe der Erfindung ein Verbindungssystem bereitzustellen, das zumindest einen im Stand der Technik genannten Nachteil überwindet und insbesondere geringeren Toleranzschwankungen unterliegt.

Die erfindungsgemäße Aufgabe wird mit einem Verbindungssystem mit den Merkmalen des unabhängigen Anspruchs gelöst. Weitere vorteilhafte Ausgestaltungen der Erfindung lassen sich den Unteransprüchen, der Beschreibung sowie den Zeichnungen entnehmen.

Ein erfindungsgemäßes Verbindungssystem weist einen Steckverbinder, einen Gegensteckverbinder und eine Verriegelungseinheit auf. Die Verriegelungseinheit weist weiterhin einen Riegel auf und ist am Steckverbinder angeordnet. Sowohl der Steckverbinder als auch der Gegensteckverbinder weisen jeweils ein Gehäuse auf. Weiterhin weisen sowohl der Steckverbinder als auch der Gegensteckverbinder jeweils einen Kontaktträger auf, wobei der Kontaktträger des Steckverbinders im Gehäuse des Steckverbinders und der Kontaktträger des Gegensteckverbinders im Gehäuse des Gegensteckverbinders angeordnet ist. Die Kontaktträger können hierbei zum Beispiel mithilfe von Schnappverbindungen lösbar im jeweiligen Gehäuse befestigt sein. Ebenso kann eine zusätzliche Sekundärverriegelung vorgesehen sein, die die Kontaktträger im jeweiligen Gehäuse zusätzlich befestigt. Der Kontaktträger des Steckverbinders und der Kontaktträger des Gegensteckverbinders sind jeweils mit zumindest einem Signalleiter verbunden. Die Kontaktträger können somit dazu genutzt werden, die Signalleiter innerhalb der Gehäuse des Steckverbinders und des Gegensteckverbinders anzuordnen. Bei dem Signalleiter kann es sich sowohl um einen Lichtleiter zur Übertragung von Lichtsignalen als auch um einen elektrischen Leiter zum Übertragen von elektrischen Signalen handeln. Der Signalleiter kann sowohl Teil eines ein- oder mehradrigen Kabels als auch direkt mit einer Leiterplatine signalleitend verbunden sein. Handelt es sich um einen elektrischen Leiter, kann der Signalleiter bspw. mit der Leiterplatine verlötet sein. Handelt es sich hingegen um einen Lichtleiter, kann der Signalleiter mithilfe eines Übertragungselements mit der Leiterplatine verbunden sein, welches Lichtsignale in elektrische Signale umwandelt. Weiterhin ist bevorzugt, dass beide Kontaktträger die gleiche Anzahl an verbundenen Signalleitern aufweisen, wobei jedem Signalleiter der am Kontaktträger des Steckverbinders angeordnet ist ein Signalleiter des Kontaktträgers des Gegensteckverbinders zugeordnet werden kann.

Der Steckverbinder ist in einer Steckrichtung mit dem Gegensteckverbinder in eine Verbindungsposition, in der der Steckverbinder mit dem Gegensteckverbinder verbunden ist, bewegbar. In der Verbindungsposition ist der Steckverbinder derart mit dem Gegensteckverbinder verbunden, dass der Signalleiter des Steckverbinders leitend mit dem Signalleiter des Gegensteckverbinders verbunden ist. Unter einer leitenden Verbindung zwischen den Signalleitern kann in diesem Zusammenhang verstanden werden, dass in den Signalleitern verlaufende Signale auf den jeweils anderen Signalleiter übertragen werden können. Die Signalleiter können im Bereich des Kontaktträgers zusätzliche Kontaktelemente aufweisen, die die Übertragung von Signalen zwischen den Signalleitern begünstigen. Der Kontaktträger des Steckverbinders und der Kontaktträger des Gegensteckverbinders weisen jeweils eine Durchgangsöffnung auf, die quer zur Steckrichtung angeordnet ist. Die Durchgangsöffnungen erstrecken sich also mit anderen Worten quer zur Steckrichtung durch die Kontaktträger hindurch. Befinden sich der Steckverbinder und der Gegensteckverbinder in der Verbindungsposition sind die Durchgangsöffnungen der Kontaktträger dabei fluchtend zueinander angeordnet. Unter fluchtend kann in diesem Zusammenhang verstanden werden, dass die Durchgangsöffnungen der Kontaktträger gemeinsam einen Durchgang ausbilden. In einer weiteren Ausführungsform kann auch das Gehäuse des Steckverbinders eine Durchgangsöffnung aufweisen, wobei in diesem Fall in der Verbindungsposition die Durchgangsöffnungen der Kontaktträger und die Durchgangsöffnung des Gehäuses des Steckverbinders fluchtend angeordnet sind. Der Riegel der Verriegelungseinheit ist in der Verbindungsposition zwischen einer Verriegelungsposition und einer Entriegelungsposition bewegbar. In der Verriegelungsposition ist der Riegel in den Durchgangsöffnungen beider Kontaktträger angeordnet. In der Verriegelungsposition werden mithilfe der Verriegelungseinheit somit die Kontaktträger formschlüssig miteinander verbunden. In der Entriegelungsposition ist der Riegel außerhalb der Durchgangsöffnung zumindest eines Kontaktträgers angeordnet, wobei der Riegel je nach Ausführungsform auch außerhalb beider Durchgangsöffnungen angeordnet sein kann. Bevorzugt verläuft eine Bewegung des Riegels im Bereich der Durchgangsöffnungen zwischen der Entriegelungsposition und der Verriegelungsposition quer zur Steckrichtung.

Durch das erfindungsgemäße Verbindungssystem erfolgt eine formschlüssige und lösbare Verbindung zwischen Steckverbinder und Gegensteckverbinder an den Kontaktträgern mithilfe der Verriegelungseinheit. Somit kann die Toleranzkette, die direkten Einfluss auf die Verbindung zwischen der Signalleiter des Steckverbinders und des Gegensteckverbinders, insbesondere parallel zur Steckrichtung verkürzt werden. Toleranzen, die beispielsweise zwischen den Gehäusen des Steckverbinders und Gegensteckverbinders auftreten, wirken sich somit nicht auf die Verbindung zwischen den Signalleitern aus. Gleichzeitig bleibt das Verbindungssystem sehr variabel einsetzbar, da weiterhin Zusatzfunktionen, wie Kodierungen an den Gehäusen anwendbar sind.

Zumindest einer der Kontaktträger kann einen parallel zur Steckrichtung verlaufenden Steg aufweisen, in dem die Durchgangsöffnung angeordnet ist. Die Durchgangsöffnung ist dabei bevorzugt an einem Ende des Steges angeordnet, das dem Kontaktträger, der den Steg aufweist, abgewandt ist. Mithilfe eines Steges kann das fluchtende Anordnen der Durchgangsöffnungen beider Kontaktträger in der Verbindungsposition einfacher realisiert werden. Weiterhin kann es von besonderen Vorteil sein, wenn beide Kontaktträger jeweils einen Steg aufweisen, in denen jeweils die Durchgangsöffnungen angeordnet sind. Die Stege können in diesem Fall in Ihrer Formgebung derart gewählt sein, dass die Stege beim Bewegen in die Verbindungsposition zumindest abschnittsweise aneinander vorbeigleiten, sodass die Durchgangsöffnungen beider Kontaktträger fluchtend zueinander angeordnet werden können. Besonders bevorzugt weisen die Stege zueinander eine komplementäre Geometrie auf.

Der Kontaktträger des Steckverbinders und der Kontaktträger des Gegensteckverbinders können jeweils mit zwei Signalleitern verbunden sein. In diesem Fall ist es bevorzugt, wenn die Durchgangsöffnungen jeweils zwischen den Signalleitern im Kontaktträger angeordnet sind. Auf diese Weise kann eine besonders stabile formschlüssige Verbindung zwischen Steckverbinder und Gegensteckverbinder erzielt werden, da die Verbindung deutlich weniger anfällig gegen Belastungen quer zur Steckrichtung ist.

Der Riegel kann in Richtung der Verriegelungsposition mithilfe eines Federelements vorgespannt sein. Das Federelement kann direkt am Riegel oder alternativ an einem mit dem Riegel verbundenen Bauteil der Verriegelungseinheit angeordnet sein. Bevorzugt lässt sich der Riegel nur durch äußere Krafteinwirkung aus der Verriegelungsposition in die Entriegelungsposition bewegen, wenn der Riegel durch das Federelement in Richtung der Verriegelungsposition vorgespannt ist. Der Kontaktträger des Gegensteckverbinders kann eine Einführschräge aufweisen. Die Einführschräge ist bevorzugt derart angeordnet, dass bei einem Bewegen von dem Steckverbinder und dem Gegensteckverbinder in die Verbindungsposition der vorgespannte Riegel aus der Verriegelungsposition ausgelenkt wird. In Steckrichtung betrachtet kann die Einführschräge vor der Durchgangsöffnung des Kontaktträgers des Gegensteckverbinders angeordnet sein. Erreicht der ausgelenkte Riegel die Durchgangsöffnung des Kontaktträgers des Gegensteckverbinders, kann sich der Riegel aufgrund der Vorspannung bevorzugt selbstständig durch die Durchgangsöffnung in die Verriegelungsstellung bewegen.

Das Federelement ist bevorzugt am Kontaktträger des Steckverbinders angeordnet. Das Gehäuse kann einen Durchbruch aufweisen, in dem das Federelement angeordnet ist. Das Federelement ist weiterhin bevorzugt einstückig mit dem Kontaktträger ausgebildet. Indem der Kontaktträger das Federelement aufweist, kann die Anzahl notwendiger Bauteile weiterhin geringgehalten werden, was sowohl den Montageaufwand des Steckverbinders als auch die Kosten zusätzlich senken kann. Weiterhin kann die Verriegelungseinheit im geringen Abstand zum Gehäuse angeordnet werden, was den notwendigen Bauraum reduziert.

Die Verriegelungseinheit kann einen Hebelarm aufweisen, an dem der Riegel angeordnet ist. Der Hebelarm kann um eine Drehachse, die quer zur Steckrichtung verläuft, angeordnet sein. Der Hebelarm kann einstückig mit dem Gehäuse des Steckverbinders oder auch als separates Bauteil ausgeführt sein. Eine Längsachse des Hebelarms kann zumindest in der Verriegelungsposition parallel zur Steckrichtung angeordnet sein. Mithilfe der Drehachse ist der Hebelarm in einer erste und eine zweite Drehrichtung bewegbar. In der ersten Drehrichtung ist der Riegel von der Entriegelungsposition in die Verriegelungsposition bewegbar. In der zweiten Drehrichtung ist der Riegel von der Verriegelungsposition in die Entriegelungsposition bewegbar. Der Hebelarm kann über ein Drehgelenk mit dem Gehäuse des Steckverbinders verbunden sein. Besonders bevorzugt ist das Drehgelenk an einer Seite des Gehäuses des Steckverbinders angeordnet, die dem Kontaktträger des Steckverbinders abgewandt ist.

Der Hebelarm kann ein erstes Rastelement aufweisen, das mit einem ersten Gegenrastelement am Gegensteckverbinder, insbesondere am Gehäuse des Gegensteckverbinders, in der Verbindungsposition verbindbar ist. Hierbei ist besonders bevorzugt, dass das erste Rastelement mit dem ersten Gegenrastelement verbindbar ist, wenn der Riegel in der Verriegelungsposition angeordnet ist. Das erste Rastelement kann beispielsweise als Schnapphaken und das erste Gegenrastelement als Rastlasche ausgeführt sein. Das erste Rastelement ist bevorzugt derart am Hebelarm angeordnet, der Hebelarm bei einer Bewegung des Steckverbinders gegenüber dem Gegensteckverbinder in die Verbindungsposition durch den Kontakt mit dem ersten Gegenrastelement in die zweite Drehrichtung ausgelenkt wird, bevor das erste Rastelement mit dem ersten Gegenrastelement verbunden wird. Weiterhin kann durch die Verbindung zwischen dem ersten Rastelement und dem ersten Gegenrastelement eine zusätzliche formschlüssige Verbindung zwischen dem Steckverbinder und dem Gegensteckverbinder hergestellt werden.

Die Verriegelungseinheit kann ein parallel zur Steckrichtung und insbesondere linear verschiebbares Betätigungselement mit einem ersten Anschlagelement aufweisen. Bevorzugt ist das Betätigungselement am Gehäuse des Steckverbinders auf einer dem Kontaktträger des Steckverbinders abgewandten Seite angeordnet. Der Hebelarm kann bei einer Verschiebung des Betätigungselements in Steckrichtung mithilfe des ersten Anschlagelements in die erste Drehrichtung bewegbar sein. Das erste Anschlagelement kann beispielsweise durch die Bewegung des Betätigungselements in Steckrichtung eine Kraft in Steckrichtung auf den Hebelarm ausüben. Auf diese Weise ist die lineare Bewegung des Betätigungselements mit der Drehbewegung des Hebelarms gekoppelt und ermöglicht eine einfache Bedienung der Verriegelungseinheit.

Das Betätigungselement kann ein zweites Anschlagelement aufweisen. Das zweite Anschlagelement ist vorzugsweise derart angeordnet, dass der Hebelarm bei einer Verschiebung des Betätigungselements entgegen der Steckrichtung mithilfe des zweiten Anschlagelements in die zweite Drehrichtung bewegbar ist. Bevorzugt ist dabei der Hebelarm zwischen dem ersten Anschlagelement und dem zweiten Anschlagelement angeordnet. Auf diese Weise ist die Bewegung des Hebelarms in die erste und die zweite Drehrichtung mit der insbesondere linearen Bewegung des Betätigungselements in und entgegen der Steckrichtung gekoppelt. Somit lässt sich über den Hebelarm der Riegel mithilfe des Betätigungselements zwischen Verriegelungsposition und Entriegelungsposition bewegen.

Das Betätigungselement kann zumindest ein zweites Rastelement aufweisen, das mit einem zweiten Gegenrastelement am Steckverbinder verbindbar ist. Das Betätigungselement kann durch die Verbindung zwischen dem zweiten Rastelement und dem zweiten Gegenrastelement in einer ersten Betätigungsposition fixiert werden. Vorzugsweise befindet sich der Riegel in der Entriegelungsstellung, wenn das Betätigungselement in der ersten Betätigungsposition angeordnet ist. Weiterhin ist bevorzugt, dass in der ersten Betätigungsposition das Betätigungselement eine Bewegung des Riegels in die Verriegelungsposition verhindert. Der Gegensteckverbinder kann zumindest ein Wirkelement aufweisen, das das zweite Rastelement in der Verbindungsposition auslenkt und eine Verbindung mit dem zweiten Gegenrastelement verhindert. Darüber hinaus kann das Wirkelement ein Lösen der Verbindung zwischen dem zweiten Rastelement und dem zweiten Gegenrastelement bewirken, wenn der Steckverbinder und der Gegensteckverbinder in eine Verbindungsposition bewegt werden, während das zweite Rastelement mit dem zweiten Gegenrastelement verbunden ist. Das Wirkelement kann beispielsweise eine Anschlagfläche oder ein Vorsprung sein. Mithilfe des zweiten Rastelements und des zweiten Gegenrastelements kann das Betätigungselement in der ersten Betätigungsposition gehalten werden, wenn der Steckverbinder und der Gegensteckverbinder außerhalb Verbindungsposition angeordnet sind. Indem das Wirkelement eine Verbindung zwischen dem zweiten Rastelement und dem zweiten Gegenrastelement verhindert bzw. eine bestehende Verbindung löst, sobald der Steckverbinder und der Gegensteckverbinder in die Verbindungsposition bewegt werden, kann zusätzlich sichergestellt werden, dass das Betätigungselement nur in der Verbindungsposition aus der ersten Betätigungsposition bewegt werden kann.

Das Betätigungselement kann zumindest ein drittes Rastelement aufweisen, das durch eine Bewegung des Betätigungselements in Steckrichtung mit einem dritten Gegenrastelement verbindbar ist. Das dritte Gegenrastelement kann sowohl am Steckverbinder als auch am Gegensteckverbinder angeordnet sein. Eine Verbindung zwischen dritten Rastelement und dritten Gegenrastelement kann das Betätigungselement in einer zweiten Betätigungsposition fixieren. Bevorzugt befindet sich der Riegel in der Verriegelungsposition, wenn das Betätigungselement in der zweiten Betätigungsposition angeordnet ist. Weiterhin ist bevorzugt, dass in der zweiten Betätigungsposition das Betätigungselement eine Bewegung des Riegels in die Entriegelungsposition verhindert. Durch die Fixierung des Betätigungselements in der zweiten Betätigungsposition kann sichergestellt werden, dass sich das Betätigungselement nicht von allein aus dieser zweiten Betätigungsposition herausbewegen kann.

Die Verriegelungseinheit kann ein Befestigungselement aufweisen, das den Kontaktträger des Steckverbinders in dem Gehäuse des Steckverbinders, insbesondere lösbar, befestigt. Beispielsweise kann die Verriegelungseinheit einen Bolzen aufweisen, der in eine Steckkammer des Gehäuses des Steckverbinders hineinragt und den in der Steckkammer befindlichen Kontaktträger in der Steckkammer zumindest zusätzlich befestigt. Der Bolzen ist in diesem Fall bevorzugt senkrecht zur Steckrichtung angeordnet.

Der Steckverbinder kann eine Positionssicherung aufweisen, die in zumindest einer Endraststellung den Riegel in der Verriegelungsposition blockiert. Vorzugsweise ist die Positionssicherung zwischen einer Vorraststellung und der Endraststellung bewegbar, wenn der Riegel in der Verriegelungsposition angeordnet ist. In der Endraststellung kann die Positionssicherung den Riegel in der Verriegelungsposition blockieren und verhindert insbesondere eine Bewegung des Riegels in die Entriegelungsposition. In der Vorraststellung kann die Positionssicherung am Steckverbinder angeordnet sein, ohne den Riegel in der Vorraststellung zu blockieren. Hierzu muss die Positionssicherung jedoch nicht direkt mit dem Riegel mechanisch gekoppelt sein. Es ist auch möglich, dass die Positionssicherung zwischen der Vorraststellung und der Endraststellung bewegbar ist, wenn das Betätigungselement in der zweiten Betätigungsposition angeordnet ist. Die Positionssicherung kann in der Endraststellung beispielsweise eine Drehbewegung des Hebelarms in die zweite Drehrichtung verhindern. Alternativ oder zusätzlich kann die Positionssicherung den Riegel auch dadurch blockieren, dass das Betätigungselement durch die Positionssicherung in der zweiten Betätigungsposition blockiert wird.

Die Verriegelungseinheit kann zumindest einen Stift aufweisen, der in der Endraststellung innerhalb einer an der Positionssicherung angeordneten Ausnehmung angeordnet ist. Bevorzugt ist der Stift in der Vorraststellung außerhalb der Ausnehmung angeordnet. Der Stift erstreckt sich vorzugsweise senkrecht zur Steckrichtung und kann am Riegel oder am Hebelarm angeordnet sein. Durch das Anordnen des Stiftes in der Ausnehmung kann in der Endraststellung der Riegel zusätzlich mechanisch stabilisiert werden. Das Risiko, dass der Riegel durch von außen auf das Verbindungssystem wirkende Kräfte aus der Verriegelungsposition bewegt wird, kann somit vermieden werden.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigen:
- Figur 1: eine erste Ausführungsform eines erfindungsgemäßen Verbindungssystems in einer perspektivischen Explosionsdarstellung;
- Figur 2: eine Schnittdarstellung des erfindungsgemäßen Verbindungssystems gemäß der ersten Ausführungsform;
- Figur 3: eine weitere Schnittdarstellung des erfindungsgemäßen Verbindungssystems gemäß der ersten Ausführungsform;
- Figur 4: eine perspektivische Darstellung einer zweiten Ausführungsform des erfindungsgemäßen Verbindungssystems;
- Figur 5: eine weitere perspektivische Darstellung des erfindungsgemäßen Verbindungssystems gemäß der zweiten Ausführungsform in einer Verbindungsposition;
- Figur 6: eine perspektivische Darstellung einer dritten Ausführungsform des erfindungsgemäßen Verbindungssystems;
- Figur 7: eine weitere perspektivische Darstellung des erfindungsgemäßen Verbindungssystems gemäß der dritten Ausführungsform;
- Figur 8: eine perspektivische Darstellung einer vierten Ausführungsform des erfindungsgemäßen Verbindungssystems;
- Figur 9: eine weitere perspektivische Darstellung des erfindungsgemäßen Verbindungssystems gemäß der vierten Ausführungsform;
- Figur 10: eine weitere perspektivische Darstellung des erfindungsgemäßen Verbindungssystems gemäß der vierten Ausführungsform;
- Figur 11: eine fünfte Ausführungsform des erfindungsgemäßen Verbindungssystems in einer perspektivischen Explosionsdarstellung;
- Figur 12: eine perspektivische Darstellung des erfindungsgemäßen Verbindungssystems gemäß der fünften Ausführungsform in einer Verbindungsposition, und
- Figur 13: eine Schnittdarstellung des erfindungsgemäßen Verbindungssystems gemäß der fünften Ausführungsform.

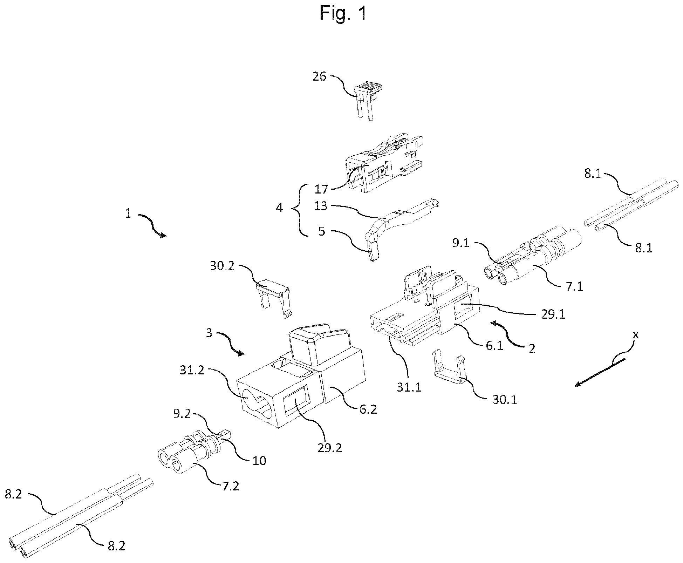

Figur 1 zeigt eine erste Ausführungsform eines erfindungsgemäßen Verbindungssystems 1 in einer perspektivischen Explosivdarstellung. Das Verbindungssystem 1 besteht aus einem Steckverbinder 2, einem Gegensteckverbinder 3 und einer Verriegelungseinheit 4. Der Steckverbinder 2 umfasst ein Gehäuse 6.1, in dem eine Steckkammer 31.1 ausgebildet ist. In die Steckkammer 31.1 kann ein Kontaktträger 7.1 eingebracht werden. Innerhalb der Steckkammer 31.1 wird der Kontaktträger 7.1 mithilfe einer Primärbefestigung 29.1 und einer Sekundärbefestigung 30.1 lösbar befestigbar ist. Zwei Signalleiter 8.1 sind mit dem Kontaktträger 7.1 verbunden. In der vorliegenden Ausführungsform handelt es sich bei den Signalleitern 8.1 um Lichtleiter. Der Kontaktträger 7.1 besitzt zwischen den Signalleitern 8.1 eine Durchgangsöffnung 9.1. Der Gegensteckverbinder 3 besitzt ebenfalls ein Gehäuse 6.2 mit einer Steckkammer 31.2 in der ein Kontaktträger 7.2 mithilfe einer Primärbefestigung 29.2 und einer Sekundärbefestigung 30.2 lösbar befestigbar ist. Der Kontaktträger 7.2 des Gegensteckverbinders 3 ist ebenfalls mit zwei Signalleitern 8.2 in Form von Lichtleitern verbunden. Der Kontaktträger 7.2 des Gegensteckverbinders 3 besitzt einen sich weg vom Kontaktträger 7.2 und parallel zu einer Steckrichtung x erstreckenden Steg 10. Der Steg 10 besitzt ebenfalls eine Durchgangsöffnung 9.2. Die Verriegelungseinheit 4 ist am Gehäuse 6.1 des Steckverbinders 2 angeordnet und besteht aus einem Riegel 5 der mit einem Hebelarm 13 verbunden ist und einem Betätigungselement 17. Das Verbindungssystem 1 umfasst weiterhin eine Positionssicherung 26, die in der vorliegenden Ausführungsform am Steckverbinder 2 angeordnet ist.

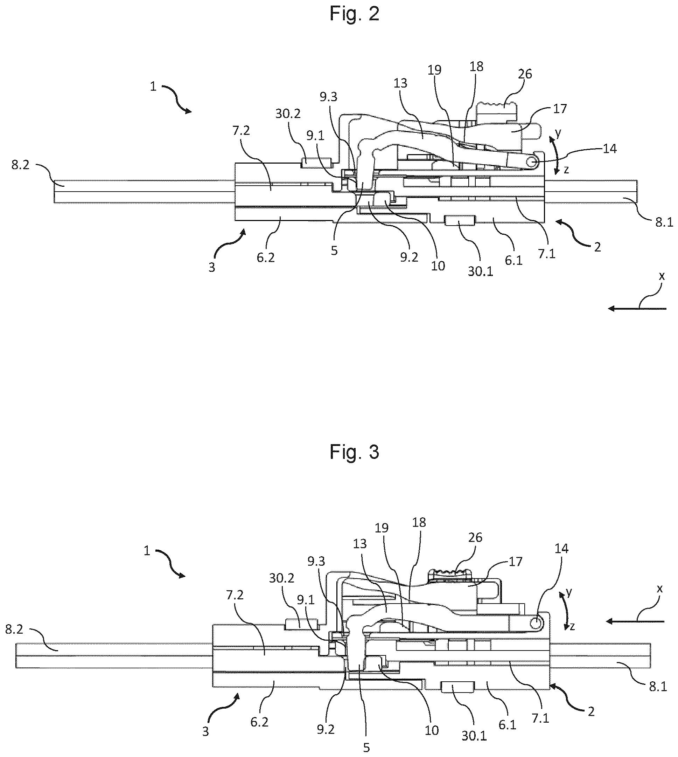

Figur 2 zeigt eine Schnittansicht des Verbindungssystems 1 gemäß der ersten Ausführungsform. Die Schnittebene verläuft hierbei parallel zur Steckrichtung x und zwischen den Signalleitern 8.1; 8.2. Steckverbinder 2 und Gegensteckverbinder 3 befinden sich in einer Verbindungsposition. In der Verbindungsposition sind auch die Signalleiter 8.1; 8.2 leitend miteinander verbunden, so dass in der vorliegenden Ausführungsform Lichtsignale zwischen den Signalleitern 8.1 des Steckverbinders 2 und den Signalleitern 8.2 des Gegensteckverbinders 3 übertragen werden können. Der Hebelarm 13 ist über eine Drehachse 14 mit dem Gehäuse 6.1 des Steckverbinders 2 verbunden. In der vorliegenden Ausführungsform ist die Drehachse 14 durch ein Drehgelenk ausgebildet. Der Hebelarm 13 ist in eine erste Drehrichtung y und eine zweite Drehrichtung z bewegbar. In der Verbindungsposition sind die Durchgangsöffnungen 9.1; 9.2 der Kontaktträger 7.1; 7.2 sowie eine Durchgangsöffnung 9.3 im Gehäuse 6.1 des Steckverbinders 2 fluchtend zueinander angeordnet. Der mit dem Hebelarm verbundene Riegel 5 ist innerhalb einer im Gehäuse 6.1 angeordneten Durchgangsöffnung 9.3 und einer Durchgangsöffnung 9.1 im Kontaktträger 7.1 des Steckverbinders 2 angeordnet. Der Riegel 5 ist jedoch außerhalb der Durchgangsöffnung 9.2 des Gegensteckverbinders 3 angeordnet und befindet sich in einer Entriegelungsposition. Das Betätigungselement 17 ist parallel zwischen einer ersten und einer zweiten Betätigungsposition bewegbar am Gehäuse 6.1 des Steckverbinders 2 angeordnet. In der gezeigten Darstellung befindet sich das Betätigungselement 17 in der ersten Betätigungsposition. Das Betätigungselement 17 besitzt ein erstes Anschlagelement 18 und ein zweites Anschlagelement 19. Der Hebelarm 13 verläuft dabei zwischen dem ersten und dem zweiten Anschlagelement 18; 19. Die Positionssicherung 26 ist am Betätigungselement 17 in einer Vorraststellung angeordnet.

Figur 3 zeigt eine weitere Schnittansicht des Verbindungssystem 1 gemäß der ersten Ausführungsform. Im Unterschied zur Figur 2 ist das Betätigungselement 17 aus der ersten Betätigungsposition in Steckrichtung x in eine zweite Betätigungsposition verschoben wurden. Dabei wurden ebenfalls das erste und das zweite Anschlagelement 18; 19 in die Steckrichtung x bewegt. Durch das erste Anschlagelement 18 wurde dabei der Hebelarm 13 in die erste Drehrichtung y bewegt. Das Bewegen des Hebelarms 13 in die erste Drehrichtung y hat dabei den Riegel 5 aus der Entriegelungsposition in eine Verriegelungsposition bewegt. In der Verriegelungsposition, die in Figur 3 ersichtlich ist, ist der Riegel 5 in den Durchgangsöffnungen 9.1; 9.2 beider Kontaktträger sowie in der Durchgangsöffnung 9.3 des Gehäuses 6.1 angeordnet. Die Durchgangsöffnungen 9.1; 9.2; 9.3 verlaufen dabei quer zur Steckrichtung, so dass durch den Riegel 5 der Verriegelungsposition eine formschlüssige Verbindung zwischen den Kontaktträger 7.1 des Steckverbinders 2 und dem Kontaktträger 7.2 des Gegensteckverbinders erzeugt wird. Die Positionssicherung 26 ist in einer Endraststellung angeordnet und blockiert eine Bewegung des Betätigungselements 17 zurück in die erste Betätigungsposition. Da das erste Anschlagelement 18 in der zweiten Betätigungsposition am Hebelarm 13 anliegt, ist somit auch der Riegel in der Verriegelungsposition blockiert. Um den Riegel 5 zurück in die Entriegelungsposition zu bewegen kann das Betätigungselement 17 in die erste Betätigungsposition entgegen der Steckrichtung x bewegt werden, sofern die Positionssicherung 26 in der Vorraststellung angeordnet ist. Durch das Bewegen des Betätigungselements 17 entgegen der Steckrichtung lenkt das zweite Anschlagelement 19 den Hebelarm 13 in die zweite Drehrichtung z aus und bewegt somit den Riegel aus der Verriegelungsposition zurück in die Entriegelungsposition.

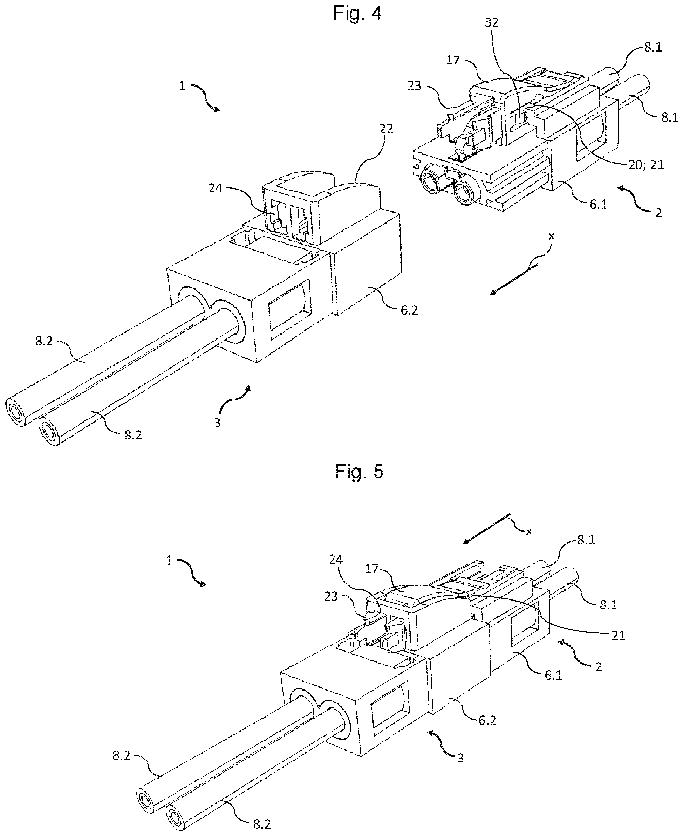

Figur 4 zeigt eine zweite Ausführungsform des erfindungsgemäßen Verbindungssystems 1 in einer perspektivischen Ansicht, wobei der Steckverbinder 2 und der Gegensteckverbinder 3 außerhalb der Verbindungsposition angeordnet sind. Das Betätigungselement 17 ist in der ersten Betätigungsposition angeordnet. Das Betätigungselement 17 besitzt ein zweites Rastelement 20, das mit einem zweiten Gegenrastelement 21 verbunden ist. In der vorliegenden Ausführungsform ist das zweite Rastelement 20 als Rasthaken und das zweite Gegenrastelement 21 als Rastaufnahme ausgebildet. Durch die Verbindung zwischen dem zweiten Rastelement 20 und dem zweiten Gegenrastelement 21, wird das Betätigungselement 17 in der ersten Betätigungsposition fixiert. Um ein Bewegen des Betätigungselements 17 in die zweite Betätigungsposition zu ermöglichen, wenn Steckverbinder 2 und Gegensteckverbinder 3 in einer Verbindungsposition angeordnet sind, besitzt der Gegensteckverbinder 3 ein Wirkelement 22, das in der vorliegenden Ausführungsform als Anschlagfläche ausgeführt ist. Werden der Steckverbinder 2 und der Gegensteckverbinder 3 in die Verbindungsposition bewegt, schlägt das Wirkelement 22 an ein Auslenkelement 32 an. Durch das Anschlagen wird in der vorliegenden Ausführungsform das zweite Rastelement 20 aus der Verbindung mit dem zweiten Gegenrastelement 21 gelöst.

Figur 5 zeigt die zweite Ausführungsform des erfindungsgemäßen Verbindungssystems 1 in der Verbindungsposition in einer perspektivischen Ansicht. Weiterhin ist das Betätigungselement 17 in der zweiten Betätigungsposition angeordnet. Das Betätigungselement 17 besitzt ein drittes Rastelement 23, das mit einem dritten Gegenrastelement 24 in der zweiten Betätigungsposition verbunden ist. In der vorliegenden Ausführungsform ist das dritte Rastelement 23 in Form zweier Rasthaken ausgeführt, die in das dritte Gegenrastelement 24 in Form zweier Rastaufnahmen eingreifen. Mithilfe der Verbindung über das dritte Rastelement 23 mit dem dritten Gegenrastelement 24 kann das Betätigungselement 17 in der zweiten Betätigungsposition fixiert werden. Zusätzlich kann eine weitere formschlüssige Verbindung erzeugt werden, die den Steckverbinder 2 mit dem Gegensteckverbinder 3 in der Verbindungsposition hält.

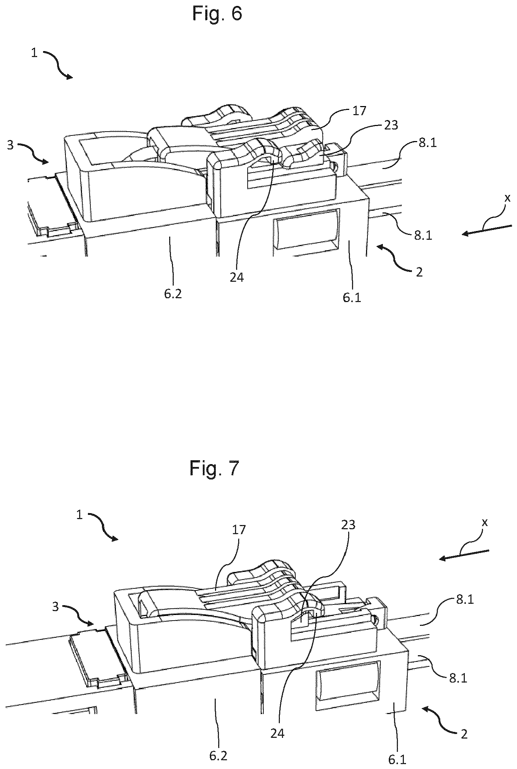

Figur 6 zeigt eine dritte Ausführungsform des erfindungsgemäßen Verbindungssystems 1 in einer perspektivischen Ansicht. Der Steckverbinder 2 und der Gegensteckverbinder 3 sind in der Verbindungsposition angeordnet, wobei das Betätigungselement 17 in der ersten Betätigungsposition angeordnet ist. Das Betätigungselement 17 besitzt zwei dritte Rastelemente 23, die mit einem dritten Gegenrastelement 24 verbindbar sind. Das Gegenrastelement 24 ist in der vierten Ausführungsform jedoch am Steckverbinder 2 angeordnet.

Figur 7 zeigt die dritte Ausführungsform des erfindungsgemäßen Verbindungssystems 1 in der perspektivischen Ansicht, wobei das Betätigungselement 17 in der zweiten Betätigungsposition angeordnet ist. Das dritte Rastelement 23 ist mit dem dritten Gegenrastelement 24 am Steckverbinder 2 verbunden, so dass das Betätigungselement 17 in der zweiten Betätigungsposition fixiert ist.

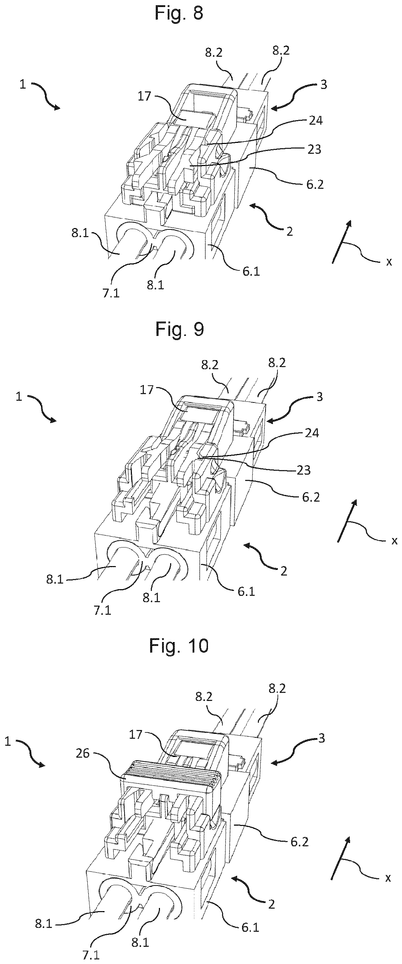

Figur 8 zeigt eine vierte Ausführungsform des erfindungsgemäßen Verbindungssystems 1 in einer perspektivischen Ansicht, wobei der Steckverbinder 2 und der Gegensteckverbinder 3 in der Verbindungsposition angeordnet sind. Das Betätigungselement 17 ist in der ersten Betätigungsposition angeordnet. Weiterhin besitzt das Betätigungselement 17 zwei sich gegenüberliegende dritte Rastelemente 23, die seitlich vom Betätigungselement 17 nach außen abstehen. Beide dritte Rastelemente sind auf elastischen Armen des Betätigungselements 17 angeordnet. Der Steckverbinder 2 besitzt zwei sich gegenüberliegende dritte Gegenrastelemente 24, die mit den dritten Rastelementen 23 verbindbar sind. Wird das Betätigungselement 17 in Steckrichtung x in die zweite Betätigungsposition bewegt, bewegen sich die elastischen Arme nach innen, bis die dritten Rastelemente 23 in die dritten Gegenrastelemente 24 eingreifen. Aufgrund der elastischen Verformung bewegen sich die elastischen Arme selbstständig zurück nach außen und halten somit die dritten Rastelemente 23 mit den Gegenrastelementen 24 formschlüssig verbunden.

Figur 9 zeigt die vierte Ausführungsform des erfindungsgemäßen Verbindungssystems 1 in der perspektivischen Ansicht. Der Steckverbinder 2 und der Gegensteckverbinder 3 sind in der Verbindungsposition angeordnet, wobei das Betätigungselement 17 in der zweiten Betätigungsposition angeordnet ist. Die dritten Rastelemente 23 sind mit den Gegenrastelementen 24 verbunden und fixieren das Betätigungselement 17 in der zweiten Betätigungsposition.

Figur 10 zeigt die vierte Ausführungsform des erfindungsgemäßen Verbindungssystems 1 in der perspektivischen Ansicht in der Verbindungsposition, wobei das Betätigungselement 17 in der zweiten Betätigungsposition angeordnet ist. Zusätzlich ist am Steckverbinder 2 eine Positionssicherung 26 befestigt. Die Positionssicherung 26 ist in der Endraststellung positioniert und teilweise zwischen den elastischen Armen des Befestigungselements 17 angeordnet. Durch die Anordnung der Positionssicherung 26 zwischen den elastischen Armen, können die Arme nicht mehr nach innen und somit die dritten Rastelemente 23 nicht aus der Verbindung mit den Gegenrastelementen 24 gelöst werden. Auf diese Weise blockiert die Positionssicherung 26 das Betätigungselement 17 zusätzlich in der zweiten Betätigungsposition.

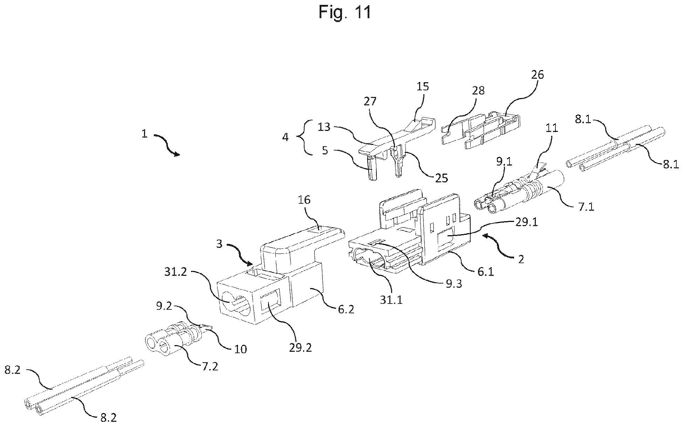

Figur 11 zeigt eine fünfte Ausführungsform des erfindungsgemäßen Verbindungssystems 1 in einer perspektivischen Explosionsdarstellung. Im Unterschied zur ersten Ausführungsform weist die Verriegelungseinheit 4 den Hebelarm 13 und den Riegel 5 auf. Ein zusätzliches Betätigungselement wird in der fünften Ausführungsform nicht benötigt. Der Hebelarm ist mithilfe eines Befestigungselements 25 mit dem Gehäuse 6.1 des Steckverbinders 2 verbunden. Die Positionssicherung 26 ist zwischen dem Gehäuse 6.1 und dem Hebelarm 13 angeordnet und zwischen einer Vorraststellung und Endraststellung bewegbar. Die Positionssicherung 26 besitzt des Weiteren zwei Ausnehmungen 28, in die zwei an dem Hebelarm angeordnete Stifte 27 in der Endraststellung einbringbar sind. Der Hebelarm 13 besitzt darüber hinaus ein erstes Rastelement 15, das mit einem Gegenrastelement 16 am Gehäuse 6.2 des Gegensteckverbinders 3 verbindbar ist.

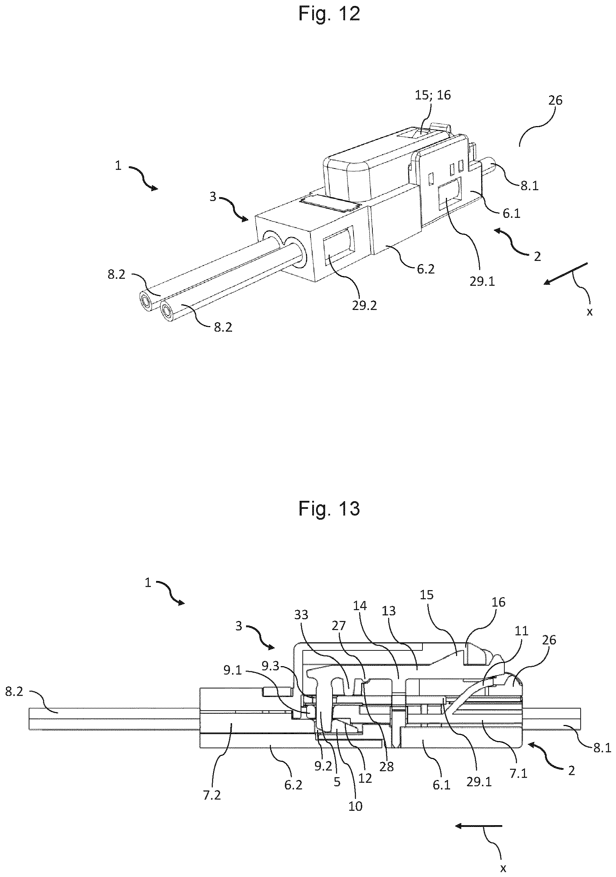

Figur 12 zeigt die fünfte Ausführungsform des erfindungsgemäßen Verbindungssystems 1 in einer perspektivischen Ansicht, wobei der Steckverbinder 2 mit dem Gegensteckverbinder 3 in einer Verbindungsposition angeordnet ist. Das erste Rastelement 15 ist mit dem ersten Gegenrastelement 16 verbunden. In der vorliegenden Ausführungsform ist das erste Rastelement 15 als Rasthaken und das Gegenrastelement 16 als Rastlasche ausgebildet., so dass eine formschlüssige Verbindung zwischen Steckverbinder 2 und Gegensteckverbinder 3 erzeugt wird.

Figur 13 zeigt eine Schnittansicht der fünften Ausführungsform des erfindungsgemäßen Verbindungssystems 1 in der Verbindungsposition, wobei die Schnittebene parallel zur Steckrichtung x und zwischen den Signalleitern 8.1; 8.2 verläuft. Das Rastelement 15 ist derart am Hebelarm 13 angeordnet, dass bei einem Bewegen des Steckverbinders 2 in die Verbindungsposition das Rastelement 15 zuerst an das Gegenrastelement anschlägt. Durch die am Rastelement 15 befindliche schiefe Ebene wird der Hebelarm 13 in die zweite Drehrichtung ausgelenkt, so dass der Riegel 5 in die Entriegelungsposition bewegt wird. Erreicht der Steckverbinder 2 die Verbindungsposition schnappt das Rastelement 15 in das Gegenrastelement 16 ein und der Hebelarm bewegt sich aufgrund der Vorspannung in die erste Drehrichtung. Der Riegel 5 bewegt sich folglich zurück in die Verriegelungsposition. Das Befestigungselement 25 erstreckt sich durch die Steckkammer des Steckverbinders 2, so dass das Befestigungselement 25 nicht nur den Hebelarm 13 und den Riegel 5 am Steckverbinder 2 befestigt, sondern auch als zusätzliche Befestigung des Kontaktträgers 7.1 in der Steckkammer des Steckverbinders 2 dient. Der Kontaktträger 7.1 besitzt darüber hinaus ein Federelement 11, dass den Hebelarm 13 in die erste Drehrichtung y und damit den Riegel 5 in die Verriegelungsposition vorspannt. Um zu verhindern, dass der Hebelarm 13 im Bereich des Riegels überspannt wird, weist der Hebelarm 13 auf einer dem Gehäuse 6.1 des Steckverbinders 2 zugewandten Seite ein Stützelement 33 auf, das in der Verriegelungsposition an dem Gehäuse 6.1 anliegt. Die Drehachse 14 des Hebelarms 13 befindet sich in der vorliegenden Ausführungsform im Bereich des Befestigungselements 25. Gleichzeitig spannt das Federelement 11 das erste Rastelement 15 gegen das erste Gegenrastelement 16 und gewährleistet zusätzlich eine sichere Verbindung zwischen dem ersten Rastelement 15 und dem ersten Gegenrastelement 16. Durch die Vorspannung des Riegels 5 in die Verriegelungsposition kann nicht nur eine stabile formschlüssige Verbindung erzeugt werden, wenn der Riegel 5 innerhalb der Durchgangsöffnungen 9.1; 9.2; 9.3 angeordnet ist. Vielmehr kann somit sichergestellt werden, dass der Riegel 5 selbstständig in die Durchgangsöffnung 9.2 des Kontaktträgers 7.2 des Gegensteckverbinders 3 einrastet, wenn der Steckverbinder 2 und der Gegensteckverbinder in die Verbindungsposition gebracht werden. Da zum Einführen des Riegels 5 in die Durchgangsöffnung 9.2 des Kontaktträgers 7.2 des Gegensteckverbinders 3, der Riegel 5 aus der Verriegelungsposition ausgelenkt werden muss, weist der Kontaktträger 7.2 des Gegensteckverbinders 3 in Steckrichtung x vor der Durchgangsöffnung 9.2 eine Einführschräge 12 auf. Die Positionssicherung 26 befindet sich in der Endraststellung und ist zwischen dem Federelement 11 und dem Gehäuse 6.1 des Steckverbinders angeordnet, so dass ein Absenken des Hebelarms 13 im Bereich des ersten Rastelements 15 verhindert wird. Zusätzlich werden die Stifte 27 am Hebelarm 13 von den Ausnehmungen 28 der Positionssicherung umschlossen, so dass ein Anheben des Hebelarms 13 im Bereich des Riegels 5 zusätzlich verhindert wird.

### BEZUGSZEICHENLISTE

- 1: Verbindungssystem
- 2: Steckverbinder
- 3: Gegensteckverbinder
- 4: Verriegelungseinheit
- 5: Riegel
- 6: Gehäuse
- 7: Kontaktträger
- 8: Signalleiter
- 9: Durchgangsöffnung
- 10: Steg
- 11: Federelement
- 12: Einführschräge
- 13: Hebelarm
- 14: Drehachse
- 15: Erstes Rastelement
- 16: Erstes Gegenrastelement
- 17: Betätigungselement
- 18: Erstes Anschlagelement
- 19: Zweites Anschlagelement
- 20: Zweites Rastelement
- 21: Zweites Gegenrastelement
- 22: Wirkelement
- 23: Drittes Rastelement
- 24: Drittes Gegenrastelement
- 25: Befestigungselement
- 26: Positionssicherung
- 27: Stift
- 28: Ausnehmung
- 29: Primärbefestigung
- 30: Sekundärbefestigung
- 31: Steckkammer
- 32: Auslenkelement
- 33: Stützelement

## Patentansprüche

1. Verbindungssystem (1) mit:
einem Steckverbinder (2),
einem Gegensteckverbinder (3), und
einer Verriegelungseinheit (4), die am Steckverbinder (2) angeordnet ist und einen Riegel (5) aufweist,
wobei der Steckverbinder (2) und der Gegensteckverbinder (3) jeweils ein Gehäuse (6.1; 6.2) und jeweils einen im Gehäuse (6.1; 6.2) angeordneten Kontaktträger (7.1; 7.2) aufweisen,
beide Kontaktträger (7.1; 7.2) jeweils mit zumindest einem Signalleiter (8.1; 8.2) verbunden sind,
der Steckverbinder (2) in einer Steckrichtung (x) in eine Verbindungsposition mit dem Gegensteckverbinder (3) bewegbar ist, in der der Signalleiter (8.1) des Steckverbinders (2) leitend mit dem Signalleiter (8.2) des Gegensteckverbinders (3) verbunden ist, **dadurch gekennzeichnet, dass**
die Kontaktträger (7.1; 7.2) jeweils zumindest eine Durchgangsöffnung (9.1; 9.2) aufweisen, die quer zur Steckrichtung (x) angeordnet ist,
in der Verbindungsposition die Durchgangsöffnungen (9.1; 9.2) der Kontaktträger (7.1; 7.2) fluchtend zueinander angeordnet sind,
der Riegel (5) in der Verbindungsposition zwischen einer Verriegelungsposition, in der der Riegel (5) in den Durchgangsöffnungen (9.1; 9.2) beider Kontaktträger (7.1; 7.2) angeordnet ist und einer Entriegelungsposition, in der der Riegel (5) außerhalb der Durchgangsöffnung (9.1; 9.2) zumindest eines Kontaktträgers (7.1; 7.2) angeordnet ist, bewegbar ist.

2. Verbindungssystem (1) nach dem vorhergehenden Anspruch, wobei zumindest ein Kontaktträger (7.1; 7.2) einen parallel zur Steckrichtung (x) verlaufenden Steg (10.1; 10.2) aufweist, in dem die Durchgangsöffnung (9.1; 9.2) des Kontaktträgers (7.1; 7.2) angeordnet ist.

3. Verbindungssystem (1) nach einem der vorhergehenden Ansprüche, wobei die Kontaktträger (7.1; 7.2) jeweils mit zwei Signalleitern (8.1; 8.2) verbunden sind und die Durchgangsöffnungen (9.1; 9.2) der Kontaktträger (7.1; 7.2) jeweils zwischen den Signalleitern (8.1; 8.2) angeordnet sind.

4. Verbindungssystem (1) nach einem der vorhergehenden Ansprüche, wobei der Riegel (5) in Richtung der Verriegelungsposition mithilfe eines Federelements (11) vorgespannt ist

5. Verbindungssystem (1) nach dem vorhergehenden Anspruch, wobei das Federelement (11) am Kontaktträger (7.1; 7.2) des Steckverbinders (2) angeordnet ist.

6. Verbindungssystem (1) nach einem der vorhergehenden Ansprüche, wobei der Riegel (5) an einem Hebelarm (13) angeordnet ist, der um eine Drehachse (14) , die quer zur Steckrichtung (x) angeordnet ist, in eine erste Drehrichtung (y) und eine der ersten Drehrichtung (y) entgegengesetzten zweiten Drehrichtung (z) bewegbar ist, wobei der Riegel (5) in der ersten Drehrichtung (y) von der Entriegelungsposition in die Verriegelungsposition und in der zweiten Drehrichtung (z) der Riegel (5) von der Verriegelungsposition in die Entriegelungsposition bewegbar ist.

7. Verbindungssystem (1) nach dem vorhergehenden Anspruch, wobei der Hebelarm (13) ein erstes Rastelement (15) aufweist, das mit einem ersten Gegenrastelement (16) am Gegensteckverbinder (3) in der Verbindungsposition verbindbar ist.

8. Verbindungssystem (1) nach Anspruch 6 oder 7, wobei die Verriegelungseinheit (4) ein parallel zur Steckrichtung (x) verschiebbares Betätigungselement (17) mit einem ersten Anschlagelement (18) aufweist, wobei der Hebelarm (13) bei einer Verschiebung des Betätigungselements (17) in Steckrichtung (x) mithilfe des ersten Anschlagelements (18) in die erste Drehrichtung (y) bewegbar ist.

9. Verbindungssystem (1) nach dem vorhergehenden Anspruch, wobei das Betätigungselement (17) ein zweites Anschlagelement (19) aufweist, wobei der Hebelarm (13) bei einer Verschiebung des Betätigungselements (17) entgegen der Steckrichtung (x) mithilfe des zweiten Anschlagelements (19) in die zweite Drehrichtung (z) bewegbar ist.

10. Verbindungssystem (1) nach einem der Ansprüche 8 oder 9, wobei das Betätigungselement (17) zumindest ein zweites Rastelement (20) aufweist, das mit einem zweiten Gegenrastelement (21) am Steckverbinder (2) verbindbar ist und das Betätigungselement (17) in einer ersten Betätigungsposition fixiert, wobei der Gegensteckverbinder (3) zumindest ein Wirkelement (22) aufweist, das das zweite Rastelement (20) in der Verbindungsposition auslenkt und eine Verbindung mit dem zweiten Gegenrastelement (21) verhindert.

11. Verbindungssystem (1) nach einem der Ansprüche 8 bis 10, wobei das Betätigungselement (17) zumindest ein drittes Rastelement (23) aufweist, das durch eine Bewegung des Betätigungselements (17) in die Steckrichtung (x) mit einem dritten Gegenrastelement (24) am Steckverbinder (2) oder am Gegensteckverbinder (3) verbindbar ist und das Betätigungselement (17) in einer zweiten Betätigungsposition fixiert.

12. Verbindungssystem (1) nach einem der vorhergehenden Ansprüche, wobei die Verriegelungseinheit (4) ein Befestigungselement (25) aufweist, das den Kontaktträger (7.1) des Steckverbinders (2) in dem Gehäuse (6.1) des Steckverbinders (2), insbesondere lösbar, befestigt.

13. Verbindungssystem (1) nach einem der vorhergehenden Ansprüche, wobei der Steckverbinder (2) eine Positionssicherung (26) aufweist, die in zumindest einer Endraststellung den Riegel (5) in der Verriegelungsposition blockiert.

14. Verbindungssystem (1) nach dem vorhergehenden Anspruch, wobei die Verriegelungseinheit (4) zumindest einen Stift (27) aufweist, der in der Endraststellung innerhalb einer an der Positionssicherung (26) angeordneten Ausnehmung (28) angeordnet ist.

## Claims

1. Connection system (1) comprising:
a plug-in connector (2),
a mating plug-in connector (3), and
a locking unit (4), which is arranged on the plug-in connector (2) and has a bolt (5),
wherein the plug-in connector (2) and the mating plug-in connector (3) each have a housing (6.1; 6.2) and each have a contact carrier (7.1; 7.2) arranged in the housing (6.1; 6.2),
the two contact carriers (7.1; 7.2) are each connected to at least one signal conductor (8.1; 8.2),
the plug-in connector (2) can be moved in a plug-in direction (x) to a connecting position with the mating plug-in connector (3), in which connecting position the signal conductor (8.1) of the plug-in connector (2) is conductively connected to the signal conductor (8.2) of the mating plug-in connector (3), **characterized in that**
the contact carriers (7.1; 7.2) each have at least one passage opening (9.1; 9.2), which is arranged transverse to the plug-in direction (x),
the passage openings (9.1; 9.2) of the contact carriers (7.1; 7.2) are arranged in alignment with one another in the connecting position,
the bolt (5) can be moved between a locking position, in which the bolt (5) is arranged in the passage openings (9.1; 9.2) of the two contact carriers (7.1; 7.2), and a unlocking position, in which the bolt (5) is arranged outside the passage opening (9.1; 9.2) of at least one contact carrier (7.1; 7.2), in the connecting position.

2. Connection system (1) according to the preceding claim, wherein at least one contact carrier (7.1; 7.2) has a web (10.1; 10.2) which runs parallel to the plug-in direction (x) and in which the passage opening (9.1; 9.2) of the contact support (7.1; 7.2) is arranged.

3. Connection system (1) according to either of the preceding claims, wherein the contact carriers (7.1; 7.2) are each connected to two signal conductors (8.1; 8.2) and the passage openings (9.1; 9.2) of the contact carriers (7.1; 7.2) are each arranged between the signal conductors (8.1; 8.2).

4. Connection system (1) according to any of the preceding claims, wherein the bolt (5) is preloaded in the direction of the locking position by means of a spring element (11).

5. Connection system (1) according to the preceding claim, wherein the spring element (11) is arranged on the contact carrier (7.1; 7.2) of the plug-in connector (2).

6. Connection system (1) according to any of the preceding claims, wherein the bolt (5) is arranged on a lever arm (13) which can be moved about a rotation axis (14), which is arranged transverse to the plug-in direction (x), in a first rotation direction (y) and a second rotation direction (z) opposite to the first rotation direction (y), wherein the bolt (5) can be moved in the first rotation direction (y) from the unlocking position to the locking position and in the second rotation direction (z) the bolt (5) can be moved from the locking position to the unlocking position.

7. Connection system (1) according to the preceding claim, wherein the lever arm (13) has a first latching element (15), which can be connected to the first mating latching element (16) on the mating plug-in connector (3) in the connecting position.

8. Connection system (1) according to Claim 6 or 7, wherein the locking unit (4) has an actuating element (17), which can be displaced parallel to the plug-in direction (x) and has a first stop element (18), wherein the lever arm (13) can be moved in the first rotation direction (y) by means of the first stop element (18) when the actuating element (17) is displaced in the plug-in direction (x).

9. Connection system (1) according to the preceding claim, wherein the actuating element (17) has a second stop element (19), wherein the lever arm (13) can be moved in the second rotation direction (z) by means of the second stop element (19) when the actuating element (17) is displaced counter to the plug-in direction (x).

10. Connection system (1) according to either of Claims 8 and 9, wherein the actuating element (17) has at least one second latching element (20), which can be connected to a second mating latching element (21) on the plug-in connector (2) and fixes the actuating element (17) in a first actuating position, wherein the mating plug-in connector (3) has at least one active element (22), which deflects the second latching element (20) in the connecting position and prevents connection to the second mating latching element (21).

11. Connection system (1) according to any of Claims 8 to 10, wherein the actuating element (17) has at least one third latching element (23), which can be connected to a third mating latching element (24) on the plug-in connector (2) or on the mating plug-in connector (3) owing to a movement of the actuating element (17) in the plug-in direction (x) and fixes the actuating element (17) in a second actuating position.

12. Connection system (1) according to any of the preceding claims, wherein the locking unit (4) has a fastening element (25), which, in particular releasably, fastens the contact carrier (7.1) of the plug-in connector (2) in the housing (6.1) of the plug-in connector (2).

13. Connection system (1) according to any of the preceding claims, wherein the plug-in connector (2) has a position securing means (26), which blocks the bolt (5) in the locking position in at least one final latching position.

14. Connection system (1) according to the preceding claim, wherein the locking unit (4) has at least one pin (27), which is arranged within a recess (28) arranged on the position securing means (26) in the final latching position.

## Revendications

1. Système de connexion (1) avec :
un connecteur enfichable (2),
un connecteur enfichable complémentaire (3), et
une unité de verrouillage (4) qui est agencée sur le connecteur enfichable (2) et qui présente un verrou (5),
le connecteur enfichable (2) et le connecteur enfichable complémentaire (3) présentant respectivement un boîtier (6.1 ; 6.2) et respectivement un support de contact (7.1 ; 7.2) agencé dans le boîtier (6.1 ; 6.2), les deux supports de contact (7.1 ; 7.2) étant respectivement connectés à au moins un conducteur de signaux (8.1 ; 8.2),
le connecteur enfichable (2) pouvant être déplacé dans une direction d'enfichage (x) dans une position de connexion avec le connecteur enfichable complémentaire (3), dans laquelle le conducteur de signaux (8.1) du connecteur enfichable (2) est connecté de manière conductrice au conducteur de signaux (8.2) du connecteur enfichable complémentaire (3), **caractérisé en ce que**
les supports de contact (7.1 ; 7.2) présentent respectivement au moins une ouverture de passage (9.1 ; 9.2) qui est agencée transversalement à la direction d'enfichage (x),
dans la position de connexion, les ouvertures de passage (9.1 ; 9.2) des supports de contact (7.1 ; 7.2) sont agencées en alignement l'une par rapport à l'autre,
le verrou (5), dans la position de connexion, peut être déplacé entre une position de verrouillage, dans laquelle le verrou (5) est agencé dans les ouvertures de passage (9.1 ; 9.2) des deux supports de contact (7.1 ; 7.2), et une position de déverrouillage, dans laquelle le verrou (5) est agencé à l'extérieur de l'ouverture de passage (9.1 ; 9.2) d'au moins un support de contact (7.1 ; 7.2).

2. Système de connexion (1) selon la revendication précédente, dans lequel au moins un support de contact (7.1 ; 7.2) présente une nervure (10.1 ; 10.2) s'étendant parallèlement à la direction d'enfichage (x), dans laquelle est agencée l'ouverture de passage (9.1 ; 9.2) du support de contact (7.1 ; 7.2).

3. Système de connexion (1) selon l'une quelconque des revendications précédentes, dans lequel les supports de contact (7.1 ; 7.2) sont respectivement connectés à deux conducteurs de signaux (8.1 ; 8.2) et les ouvertures de passage (9.1 ; 9.2) des supports de contact (7.1 ; 7.2) sont respectivement agencées entre les conducteurs de signaux (8.1 ; 8.2).

4. Système de connexion (1) selon l'une quelconque des revendications précédentes, dans lequel le verrou (5) est précontraint en direction de la position de verrouillage à l'aide d'un élément à ressort (11).

5. Système de connexion (1) selon la revendication précédente, dans lequel l'élément à ressort (11) est agencé sur le support de contact (7.1; 7.2) du connecteur enfichable (2).

6. Système de connexion (1) selon l'une quelconque des revendications précédentes, dans lequel le verrou (5) est agencé sur un bras de levier (13) qui peut être déplacé autour d'un axe de rotation (14), qui est agencé transversalement à la direction d'enfichage (x), dans une première direction de rotation (y) et une deuxième direction de rotation (z) opposée à la première direction de rotation (y), le verrou (5) pouvant être déplacé dans la première direction de rotation (y) de la position de déverrouillage à la position de verrouillage et le verrou (5) pouvant être déplacé dans la deuxième direction de rotation (z) de la position de verrouillage à la position de déverrouillage.

7. Système de connexion (1) selon la revendication précédente, dans lequel le bras de levier (13) présente un premier élément d'encliquetage (15) qui peut être connecté à un premier élément d'encliquetage complémentaire (16) sur le connecteur enfichable complémentaire (3) dans la position de connexion.

8. Système de connexion (1) selon la revendication 6 ou 7, dans lequel l'unité de verrouillage (4) présente un élément d'actionnement (17) pouvant être coulissé parallèlement à la direction d'enfichage (x) avec un premier élément de butée (18), le bras de levier (13) pouvant être déplacé dans la première direction de rotation (y) à l'aide du premier élément de butée (18) lors d'un coulissement de l'élément d'actionnement (17) dans la direction d'enfichage (x).

9. Système de connexion (1) selon la revendication précédente, dans lequel l'élément d'actionnement (17) présente un deuxième élément de butée (19), le bras de levier (13) pouvant être déplacé dans la deuxième direction de rotation (z) à l'aide du deuxième élément de butée (19) lors d'un coulissement de l'élément d'actionnement (17) à l'encontre de la direction d'enfichage (x).

10. Système de connexion (1) selon l'une quelconque des revendications 8 ou 9, dans lequel l'élément d'actionnement (17) présente au moins un deuxième élément d'encliquetage (20) qui peut être connecté à un deuxième élément d'encliquetage complémentaire (21) sur le connecteur enfichable (2) et qui fixe l'élément d'actionnement (17) dans une première position d'actionnement, le connecteur enfichable complémentaire (3) présentant au moins un élément d'action (22) qui dévie le deuxième élément d'encliquetage (20) dans la position de connexion et qui empêche une connexion avec le deuxième élément d'encliquetage complémentaire (21).

11. Système de connexion (1) selon l'une quelconque des revendications 8 à 10, dans lequel l'élément d'actionnement (17) présente au moins un troisième élément d'encliquetage (23) qui peut être connecté à un troisième élément d'encliquetage complémentaire (24) sur le connecteur enfichable (2) ou sur le connecteur enfichable complémentaire (3) par un déplacement de l'élément d'actionnement (17) dans la direction d'enfichage (x) et qui fixe l'élément d'actionnement (17) dans une deuxième position d'actionnement.

12. Système de connexion (1) selon l'une quelconque des revendications précédentes, dans lequel l'unité de verrouillage (4) présente un élément de fixation (25) qui fixe, notamment de manière amovible, le support de contact (7.1) du connecteur enfichable (2) dans le boîtier (6.1) du connecteur enfichable (2).

13. Système de connexion (1) selon l'une quelconque des revendications précédentes, dans lequel le connecteur enfichable (2) présente une sécurité de position (26) qui, dans au moins une position d'encliquetage finale, bloque le verrou (5) dans la position de verrouillage.

14. Système de connexion (1) selon la revendication précédente, dans lequel l'unité de verrouillage (4) présente au moins une broche (27) qui, dans la position d'encliquetage finale, est agencée à l'intérieur d'un évidement (28) agencé sur la sécurité de position (26).
